# EUROPÄISCHE PATENTSCHRIFT

(11) **EP 3 207 288 B1**
(45) Veröffentlichungstag und Bekanntmachung des Hinweises auf die Patenterteilung: **13.03.2019**
(21) Anmeldenummer: 15801978.6
(22) Anmeldetag: 14.10.2015
(51) Int. Cl.: F16H 57/08, F03D 15/00

(54) **PLANETENGETRIEBE FÜR EINE WINDKRAFTANLAGE**
PLANETARY GEAR TRAIN FOR A WIND TURBINE
TRAIN PLANÉTAIRE DESTINÉ À UNE ÉOLIENNE

(30) Priorität: 16.10.2014 AT 507432014
(43) Veröffentlichungstag der Anmeldung: 23.08.2017
(73) Patentinhaber: Miba Gleitlager Austria GmbH, 4663 Laakirchen (AT)
(72) Erfinder: HÖLZL, Johannes Sebastian, A-4880 Berg im Attergau (AT)
(74) Vertreter: Burger, Hannes
(86) Internationale Anmeldenummer: PCT/AT2015/050255
(87) Internationale Veröffentlichungsnummer: WO 2016/058018

(56) Entgegenhaltungen:
- WO-A1-2013/106878
- DE-A1-102010 017 464
- DE-A1-102010 040 654
- FR-A- 553 430
- SU-A1- 1 036 981
- SU-A2- 1 170 210

## Beschreibung

Die Erfindung betrifft ein Planetengetriebe, sowie eine mit dem Planetengetriebe ausgestattete Windkraftanlage.

Ein gattungsgemäßes Planetengetriebe ist etwa aus der WO2013/106878A1 derselben Anmelderin bekannt. Hierbei ist zwischen einer Planetenachse und dem Planetenträger zumindest ein Gleitlager angeordnet, wobei das Planetenrad mit der Planetenachse drehfest verbunden ist.

Aus der SU 1 036 981 A1, der SU 1 170 210 A2 und der FR 553 430 A sind weitere Planetengetriebe bekannt.

Der vorliegenden Erfindung liegt die Aufgabe zugrunde, ein verbessertes Planetengetriebe zu schaffen, welches einfach zusammengebaut und/oder gewartet werden kann.

Diese Aufgabe der Erfindung wird durch das in diesem Dokument beschriebene Planetengetriebe beziehungsweise die damit ausgestattete Windkraftanlage gelöst.

Erfindungsgemäß ist ein Planetengetriebe für eine Windkraftanlage vorgesehen, welches folgende Bauteile umfasst: ein Sonnenrad; ein Hohlrad; einen Planetenträger mit einem ersten Lageraufnahmeabschnitt und einem zweiten Lageraufhahmeabschnitt, in welchen Lageraufnahmeabschnitten jeweils mehrere Lagersitze ausgebildet sind; mehrere Planetenradachsen; mehrere Radialgleitlager zur Lagerung der Planetenradachsen im Planetenträger, wobei jede der Planetenradachsen jeweils in einem der Lagersitze des ersten und in einem der Lagersitze des zweiten Lageraufnahmeabschnittes gelagert sind; mehrere Planetenräder, welche jeweils durch die Planetenradachsen im Planetenträger gelagert sind, wobei die Planetenräder sowohl mit dem Sonnenrad als auch mit dem Hohlrad in Eingriff stehen. Der Planetenträger weist im Bereich der Lagersitze jeweils eine Trennebene auf, wobei eine erste Halbschale einer der Lagersitze durch den Planetenträger und eine zweite Halbschale einer der Lagersitze durch jeweils einen Lagerdeckel gebildet ist.

Von Vorteil an dieser Ausbildung ist, dass beim Zusammenbau des Planetengetriebes die Planetenradachse mitsamt dem Planetenrad einfach in den dafür vorgesehenen Lagersitz des Planetenträgers eingelegt werden kann und anschließend durch den Lagerdeckel befestigt werden kann. Dadurch kann die Planetenradachse in Radialrichtung des Planetenträgers herausgenommen werden, was besonders bei großen Planetengetrieben zu einer erleichterten Handhabung führt, da zum Manipulieren der Planetenradachse ein Hebewerkzeug, wie etwa ein Kran verwendet werden kann. Diese Vorteile sind ebenso bei der Wartung des Planetengetriebes vorhanden, da auch das Zerlegen des Getriebes für Wartungszwecke vereinfacht wird.

Weiters kann es zweckmäßig sein, dass einer der Lagerdeckel derart ausgebildet ist, dass er sich über einen der Lagersitze des ersten Lageraufnahmeabschnittes und den jeweils zugehörigen Lagersitz des zweiten Lageraufnahmeabschnittes erstreckt. Von Vorteil ist hierbei, dass eine Planetenradachse, beziehungsweise ein Planetenrad mit nur einem Lagerdeckel am Planetenträger befestigt werden kann. Der Lagerdackel kann somit eine hohe Stabilität aufweisen. Weiters kann der Lagerdeckel dadurch einfach und schnell am Planetenträger befestigt, beziehungsweise von diesem wieder gelöst werden. Durch den Einsatz von möglichst wenigen Bauteilen wird darüber hinaus die Übersichtlichkeit beim Zusammenbau beziehungsweise bei der Wartung des Planetengetriebes erhöht.

Ferner kann vorgesehen sein, dass einer der Lagerdeckel eine Ausnehmung aufweist, durch welche eines der Planetenräder zumindest teilweise hindurchragt. Von Vorteil ist hierbei, dass der Lagerdeckel dermaßen ausgebildet sein kann, dass er das Innenleben des Planetenträgers abdeckt, wobei nur ein mit dem Hohlrad in Eingriff stehender Teilabschnitt des Planetenrades aus dem Planetenträger beziehungsweise dem Lagerdeckel hervorragt. Dadurch kann erreicht werden dass der Planetenträger mit dem Lagerdeckel eine kompakte Einheit bildet, welche die auftretenden Lagerkräfte gut aufnehmen kann.

Darüber hinaus kann vorgesehen sein, eines der Radialgleitlager als Lagerbuchse, insbesondere als Mehrschichtgleitlager ausgebildet ist. Von Vorteil ist hierbei, dass Mehrschichtgleitlager einen Aufbau aufweisen können, um eine gute Lagerung der Planetenradachse erreichen zu können.

In einer Weiterbildung kann vorgesehen sein, dass die Lagerbuchse fest in einem der Lagersitze aufgenommen ist und eine Innenmantelfläche der Lagerbuchse zur Aufnahme einer Relativbewegung zwischen Lagerbuchse und einer der Planetenradachsen ausgebildet ist. Von Vorteil ist hierbei, dass dadurch die Lagerbuchse fest im Planetenträger aufgenommen ist. Die Relativbewegung zwischen Planetenradachse und Planetenträger wird an der Innenmantelfläche der Lagerbuchse übertragen. Somit kann erreicht werden, dass die vom Planetenrad übertragenen Kräfte möglichst an einem bestimmten Umfangbereich der Lagerbuchse einwirken.

Alternativ dazu kann vorgesehen sein, dass eines der Radialgleitlager als geteilte Gleitlagerhalbschale ausgebildet ist. Von Vorteil ist hierbei, dass bei einer geteilten Gleitlagerhalbschale die Wartung bzw. der Zusammenbau des Planetengeriebes gut durchgeführt werden kann. Darüber hinaus können hierbei für die beiden Gleitlagerhalbschalen beispielsweise unterschiedliche Werkstoffe verwendet werden, wodurch es möglich ist, dass zur Abdeckung von lokalen Belastungsspitzen Werkstoffe mit besonders guten Gleit- bzw. Festigkeitseigenschaften eingesetzt werden.

Gemäß einer Weiterbildung ist es möglich, dass eine der Planetenradachsen einteilig mit einem der Planetenräder ausgebildet ist. dadurch ist es möglich beispielsweise für die Serienfertigung eine möglichst geringe Anzahl von Einzelbauteilen im Planetengetriebe zu erreichen. Weiters kann dadurch die Qualität des Getriebes verbessert werden, da der Rundlauf des Planetenrades relativ zu den Lagerstellen an der Planetenradachse verbessert werden kann.

Ferner kann es zweckmäßig sein, dass einer der Lagerdeckel durch mehrere Verbindungselemente mit dem Planetenträger verbunden ist. Von Vorteil ist hierbei, dass die am Lagerdeckel auftretenden Kräfte somit gleichmäßig in den Planetenträger eingeleitet werden können, wodurch es möglichst zu keinen Verformungen aufgrund der Beanspruchung im Lagerdeckel kommt. Derartige Verbindungselemente können beispielsweise Schrauben zur Herstellung einer Schraubverbbindung sein.

Darüber hinaus kann vorgesehen sein, dass Axialgleitlager zwischen den Stirnflächen eines der Planetenräder und dem Planetenträger angeordnet sind. Von Vorteil ist hierbei, dass somit die in einem Planetenrad eingeleiteten Axialkräfte auf den Planetenträger übertragen und von diesem aufgenommen werden können.

Zum besseren Verständnis der Erfindung wird diese anhand der nachfolgenden Figuren näher erläutert.

Es zeigen jeweils in stark vereinfachter, schematischer Darstellung:
- Fig. 1: ein Planetengetriebe in einer Schnittansicht gemäß einem Querschnitt entlang einer Mittellinie;
- Fig. 2: ein weiteres Ausführungsbeispiel eines Planetengetriebes mit einem Teilschnitt;
- Fig. 3: ein Planetengetriebe welches als Halbschnitt gemäß der Schnittlinie III -III in Fig. 2 geschnitten ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

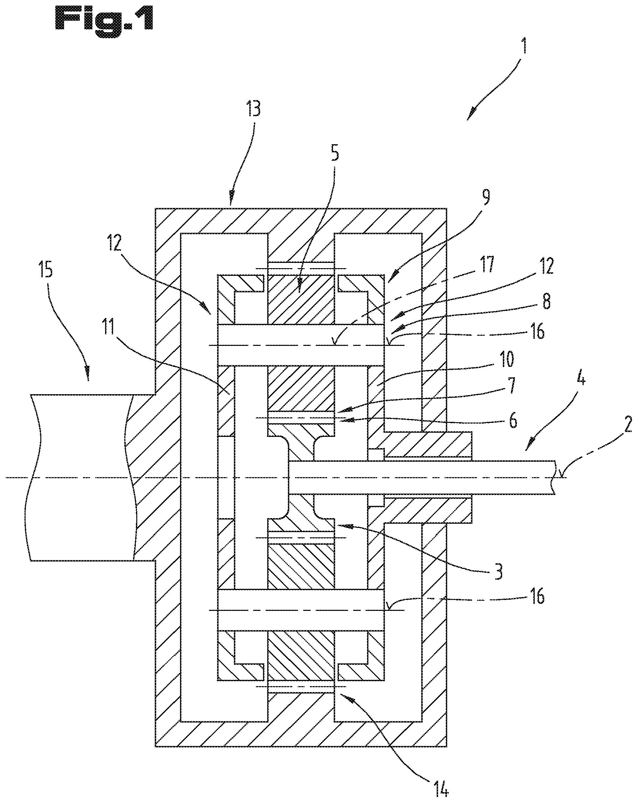

Fig. 1 zeigt ein Planetengetriebe 1 in einer Schnittansicht gemäß einem Querschnitt entlang einer Mittellinie 2. Die Ansicht nach Fig. 1 dient zur allgemeinen Erklärung des Aufbaues des Planetengetriebes und zur Darstellung der in einem Planetengetriebe verbauten Teile.

Bekanntlich umfassen Windkraftanlagen einen Turm an dessen oberen Ende eine Gondel angeordnet ist, in der der Rotor mit den Rotorblättern gelagert ist. Dieser Rotor ist über das Planetengetriebe 1 mit einem Generator, der sich ebenfalls in der Gondel befindet, wirkungsverbunden, wobei über das Planetengetriebe 1 die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

Das Planetengetriebe 1 weist ein Sonnenrad 3 auf, das mit einer Welle 4, die zum Generatorrotor führt, bewegungsgekoppelt ist. Das Sonnenrad 3 ist von mehreren Planetenrädern 5, beispielsweise zwei, vorzugsweise drei oder vier, umgeben. Sowohl das Sonnenrad 3 als auch die Planetenräder 5 weisen außenliegende Stirnverzahnungen 6, 7 auf, die in kämmenden Eingriff miteinander stehen, wobei diese Stirnverzahnungen 6, 7 in Fig. 1 schematisch dargestellt sind.

Die Planetenräder 5 sind mittels einer Planetenradachse 8 im Planetenträger 9 gelagert, wobei im Planetenträger 9 ein erster Lageraufnahmeabschnitt 10 und ein zweiter Lageraufnahmeabschnitt 11 vorgesehen sind, in welchen jeweils Lagersitze 12 zur Aufnahme der Planetenradachse 8 ausgebildet sind.

Die Planetenräder 5 umgebend ist ein Hohlrad 13 angeordnet, welches eine Innenverzahnung 14 aufweist, die in kämmendem Eingriff mit der Stirnverzahnung 7 der Planetenräder 5 steht. Das Hohlrad 13 ist mit einer Rotorwelle 15 des Rotors der Windkraftanlage bewegungsgekoppelt. Die Stirnverzahnungen 6, 7 bzw. die Innenverzahnung 14 können als Geradverzahnung, als Schrägverzahnung oder als Doppelschrägverzahnung ausgeführt sein.

Da derartige Planetengetriebe 1 dem Prinzip nach ebenfalls bereits aus dem Stand der Technik bekannt sind, beispielsweise aus dem voranstehend zitierten Dokument zum Stand der Technik, erübrigt sich eine weitere Erörterung an dieser Stelle.

Es sei darauf hingewiesen, dass im Folgenden hinsichtlich des Planetenrades 5 die Einzahl verwendet wird. Es versteht sich aber von selbst, dass in der bevorzugten Ausführung sämtliche Planetenräder 5 erfindungsgemäß ausgebildet sind.

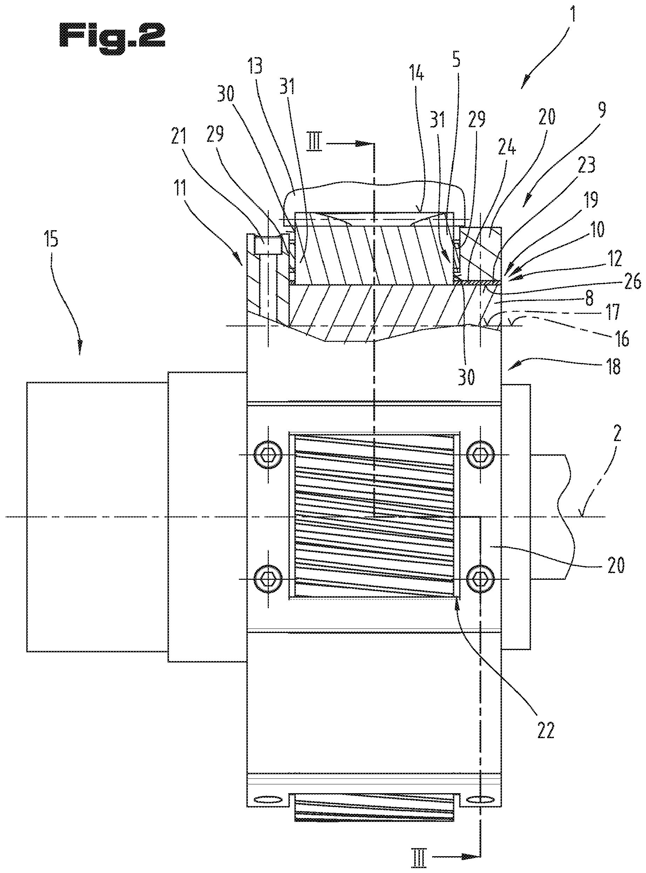

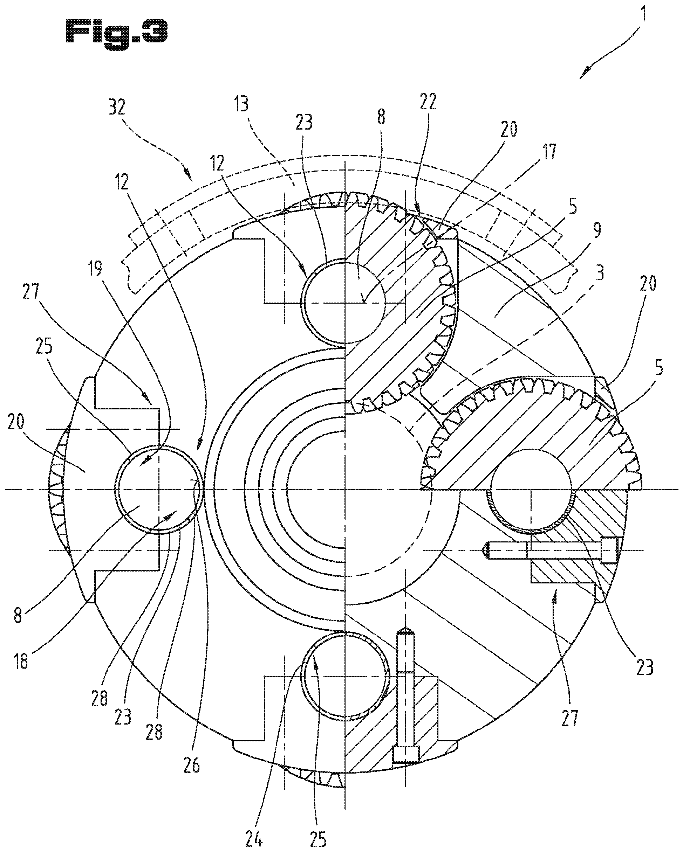

In den Figuren 2 und 3 ist eine weitere und gegebenenfalls für sich eigenständige Ausführungsform des Planetengetriebes 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Fig. 2 zeigt ein weiteres Ausführungsbeispiel des Planetengetriebes 1 in einer Seitenansicht ähnlich zu Fig. 1, wobei der Planetenträger 9 teilweise aufgeschnitten dargestellt ist, um die Lagerung der Planetenradachse 8 am Planetenträger 9 beziehungsweise den Aufbau des Planetenträgers 9 darstellen zu können.

Fig. 3 zeigt das Planetengetriebe 1 in einer Ansicht von vorne, wobei die linke Hälfte des Planetengetriebes 1 ungeschnitten dargestellt ist. Die rechte Hälfte des Planetengetriebes 1 ist in einem Schnitt gemäß der Schnittlinie III-III nach Fig. 2 dargestellt.

Der weitere Aufbau des Planetengetriebes 1 wird anhand einer Zusammenschau aus den Figuren 2 und 3 beschrieben.

Wie aus Fig. 2 ersichtlich kann vorgesehen sein, dass die die Planetenradachse 8 mit dem Planetenrad 5 gekoppelt und ist im Planetenträger 9 beidseitig gelagert ist. Die Verbindung zwischen Planetenradachse 8 und Planetenrad 5 kann beispielsweise durch einen Presssitz, durch Verschweißen, und dergleichen realisiert werden.

Alternativ dazu kann vorgesehen sein, dass das Planetenrad 5 und die Planetenradachse 8 einteilig ausgebildet sind und beispielsweise aus einem Gussstück sind, welches in der Außenkontur nachbearbeitet wurde, beziehungsweise in welchem die Verzahnung durch mechanische Bearbeitung ausgebildet wurde.

Wie aus der Schnittdarstellung in Fig. 2 ersichtlich, ist vorgesehen, dass der Planetenträger 9 im Bereich der Mittellinie 16 der Planetenradachse 8 eine Trennebene 17 aufweist, durch welche sowohl der Lagersitz 12 des ersten Lageraufnahmeabschnittes 10 als auch der Lagersitz 12 des zweiten Lageraufnahmeabschnittes 11 mittig geteilt wird. Eine erste Halbschale 18 des Lagersitzes 12 wird hierbei durch den Planetenträger 9 und eine zweite Halbschale 19 des Lagersitzes 12 durch einen Lagerdeckel 20 gebildet. Der Lagerdeckel 20 ist derart ausgebildet, dass er zusammen mit dem Planetenträger 9 die Lagersitze 12 ausformt. Der Lagerdeckel 20 ist vorzugsweise mittels einem Verbindungselement 21, wie etwa einer Schraubverbindung mit dem Planetenträger 9 verbunden.

Weiters kann vorgesehen sein, dass der Lagerdeckel 20 eine Ausnehmung 22 bzw. einen Durchbruch aufweist. Wie besonders gut in Fig. 2 ersichtlich, ist die Ausnehmung 22 dazu vorgesehen, um die Stinverzahnung 7 des Planetenrades 5 mit der Innenverzahnung 14 des Hohlrades 13 in Eingriff bringen zu können.

In einer weiteren, nicht dargestellten, Ausführungsvariante kann auch vorgesehen sein, dass der Lagersitz 12 des ersten Lageraufnahmeabschnittes 10 und der der Lagersitz 12 des zweiten Lageraufnahmeabschnittes 11 jeweils einen eigenen Lagerdeckel 20 aufweisen.

Weiters ist aus den Figuren 2 und 3 ersichtlich, dass ein Radialgleitlager 23 vorgesehen sein kann, welches in den Lagersitz 12 eingebracht ist. Das Radialgleitlager 23 kann hierbei insbesondere als Lagerbuchse 24 ausgebildet sein. Hierbei kann vorgesehen sein, dass die Lagerbuchse 24 im Lagersitz 12 mittels einer Klemmung aufgenommen ist, wobei die Klemmung durch den Lagerdeckel 20 erzeugt wird, welcher zusammen mit dem Planetenträger 9 den Lagersitz 12 bildet. Weiters kann vorgesehen sein, dass die Lagerbuchse 24 relativ zum Lagersitz 12 stillsteht und dass sich die Planetenradachse 8 relativ zur Lagerbuchse 24 dreht, wobei eine Innenmantelfläche 26 der Lagerbuchse 24 als Gleitfläche ausgebildet ist und die Relativbewegung zwischen Lagerbuchse 24 und Planetenradachse 8 aufnehmen kann.

Es kann vorgesehen sein, dass die Lagerbuchsen 24 in einem Schleudergussverfahren hergestellt sind, sodass seine gleichmäßige und glatte Innenmantelfläche 26 aufweisen.

Alternativ kann auch vorgesehen sein, dass die Lagerbuchsen 24 als gerollte Buchsen ausgeführt sind und eine Stoßfuge 25 aufweisen. Hierbei wird die Lagerbuchse 24 vorzugsweise so im Lagersitz 12 positioniert, dass die Stoßfuge 25 nicht in einem Bereich mit hoher Krafteinwirkung auf die Lagerbuchse 24 liegt. Besonders bei einer Ausbildung in der die Lagerbuchse 24 fest im Lagersitz 12 aufgenommen ist, wird diese nur lokal mit einer Radialkraft durch die Planetenradachse 8 belastet, wodurch im Bereich der Stoßfuge 25 keine oder nur geringe Lagerkräfte aufgenommen werden.

Ferner kann vorgesehen sein, dass im Planetenträger 9 beziehungsweise im Lagerdeckel 20 eine Ausnehmung ausgebildet ist, in welches das Radialgleitlager 23 eingelegt werden kann, sodass dieses axial nicht gegenüber dem Lagersitz 12 verschiebbar in diesem aufgenommen ist.

Darüber hinaus kann vorgesehen sein, dass im Planetenträger 9 ein Deckelsitz 27 ausgebildet ist, welcher mit dem Lagerdeckel 20 korrespondiert, sodass der Lagerdeckel 20 am Planetenträger 9 zentriert wird und somit der Lagersitz 12 eine möglichst glatte Innenoberfläche zur Aufnahme des Radialgleitlagers 23 aufweist.

Alternativ dazu ist es auch denkbar, dass Passstifte vorgesehen sind, welche für eine genaue Positionierung des Lagerdeckels 20 relativ zum Planetenträger 9 sorgen.

In einer weiteren Variante kann auch vorgesehen sein, dass das Radialgleitlager 23 als geteilte Gleitlagerhalbschale 28 ausgebildet ist, wobei jeweils zwei der Gleitlagerhalbschalen 28 zusammen das Radialgleitlager 23 ausbilden. Hierbei kann vorgesehen sein, dass die beiden Gleitlagerhalbschalen 28, welche das Radialgleitlager 23 ausbilden, zwei unterschiedliche Werkstoffzusammensetzungen aufweisen. Weiters ist es auch denkbar, dass das Radialgleitlager 23 durch mehrere Segmente gebildet wird. Bei einer Ausführung des Radialgleitlagers 23 durch Gleitlagerhalbschalen 28 oder durch mehrere Segmente kann vorgesehen sein, dass die einzelnen Gleitlagerhalbschalen 28 so positioniert werden, dass eine Stoßfuge 25 in welcher zwei Gleitlagerhalbschalen 28 einander kontaktieren, ebenfalls in einem Bereich mit geringer Belastung angeordnet, beziehungsweise ausgerichtet ist. Mit anderen Worten ausgedrückt muss die Teilungsebene der Gleitlagerhalbschalen 28 nicht mit der Trennebene 17 deckungsgleich sein.

Bevorzugt sind die Radialgleitlager 23 als Mehrschichtgleitlager ausgebildet. Ein Mehrschichtgleitlager umfasst zumindest eine Stützschicht und zumindest eine Gleitschicht, die auf der Stützschicht aufgebracht ist. Die Gleitschicht bildet dabei eine Lauffläche für den Planetenträger 9 oder die Planetenradachse 8.

Neben dieser zweischichtigen Ausführung des Mehrschichtgleitlagers besteht auch die Möglichkeit, dass Zwischenschichten zwischen der Gleitschicht und der Stützschicht angeordnet sind, beispielsweise eine Lagermetallschicht und/oder zumindest eine Bindeschicht und/oder eine Diffusionssperrschicht.

Beispiele für Lagermetallschichten sind: Lagermetalle auf Aluminiumbasis, Lagermetalle auf Kupferbasis, Lagermetalle auf Zinnbasis, usw.

Es können auch andere als die genannten Lagermetalle auf Basis von Nickel-, Silber-, Eisen- oder Chromlegierungen verwendet werden.

Wie aus der Fig. 2 weiters ersichtlich, kann vorgesehen sein, dass zwischen dem Planetenrad 5 und dem ersten Lageraufnahmeabschnitt 10, sowie zwischen dem Planetenrad 5 und dem zweiten Lageraufnahmeabschnitt 11 jeweils ein Axialgleitlager 29 angeordnet ist. Das Axialgleitlager 29 hat den Zweck, dass eine Stirnfläche 30 des Planetenrades 5 nicht am Planetenträger 9 bzw. am Lagerdeckel 20 anläuft.

Wie weiters ersichtlich, kann vorgesehen sein, dass das Axialgleitlager 29 in einer entsprechenden Aufnahme 31 am Lagerdeckel 20 bzw. am Planetenträger 9 aufgenommen sind. Die Axialgleitlager 29 können hierbei ebenfalls in Form von Segmenten ausgebildet sein, sodass diese Beispielsweise nur am Lagerdeckel 20 oder nur am Planetenträger 9 befestigt sind. Hierbei kann vorgesehen sein, dass das Axialgleitlager 29 derart mit dem Lagerdeckel 20 oder mit dem Planetenträger 9 verbunden ist, dass es von diesen gehaltert wird und eine Relativbewegung zwischen Axialgleitlager 29 und Planetenrad 5 stattfindet.

Weiters kann vorgesehen sein, dass wie in Fig. 3 angedeutet das Hohlrad 13 ein Hohlradsegment 32 aufweist, welches herausnehmbar ist. Dadurch kann ein Planetenrad 5 mitsamt der Planetenradachse 8 aus dem Planetenträger 9 herausgenommen werden, ohne dabei das gesamte Planetengetriebe 1 zerlegen zu müssen. Das Hohlradsegment 32, welches ebenfalls die Innenverzahnung 14 aufweist, kann durch eine Schraubverbindung mit dem Rest des Hohlrades 13 gekoppelt sein. Das Hohlradsegment 32 kann eine kleine Größe aufweisen, sodass ein Planetenrad 5 mitsamt der Planetenradachse 8 durch die entstehende Öffnung hindurch passt. In einer Alternativvariante ist es auch denkbar, dass das Hohlradsegment 32 eine Halbschale des Hohlrades 13 bildet.

Die Ausführungsbeispiele zeigen mögliche Ausführungsvarianten des Planetengetriebes 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1, 2, 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Planetengetriebes 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Planetengetriebe | 31 | Aufnahme Axialgleitlager |
| 2 | Mittellinie Planetengetriebe | 32 | Hohlradsegment |
| 3 | Sonnenrad | | |
| 4 | Welle | | |
| 5 | Planetenrad | | |
| 6 | Stirnverzahnung Sonnenrad | | |
| 7 | Stirnverzahnung Planetenrad | | |
| 8 | Planetenradachse | | |
| 9 | Planetenträger | | |
| 10 | erster Lageraufnahmeabschnitt | | |
| 11 | zweiter Lageraufnahmeabschnitt | | |
| 12 | Lagersitz | | |
| 13 | Hohlrad | | |
| 14 | Innenverzahnung | | |
| 15 | Rotorwelle | | |
| 16 | Mittellinie Planetenradachse | | |
| 17 | Trennebene | | |
| 18 | erste Halbschale | | |
| 19 | zweite Halbschale | | |
| 20 | Lagerdeckel | | |
| 21 | Verbindungselement | | |
| 22 | Ausnehmung | | |
| 23 | Radialgleitlager | | |
| 24 | Lagerbuchse | | |
| 25 | Stoßfuge | | |
| 26 | Innenmantelfläche | | |
| 27 | Deckelsitz | | |
| 28 | Gleitlagerhalbschale | | |
| 29 | Axialgleitlager | | |
| 30 | Stirnfläche | | |

## Patentansprüche

1. Planetengetriebe (1) für eine Windkraftanlage, umfassend:
ein Sonnenrad (3);
ein Hohlrad (13);
einen Planetenträger (9) mit einem ersten Lageraufnahmeabschnitt (10) und einem zweiten Lageraufnahmeabschnitt (11), in welchen Lageraufnahmeabschnitten (10, 11) jeweils mehrere Lagersitze (12) ausgebildet sind;
mehrere Planetenradachsen (8);
mehrere Radialgleitlager (23) zur Lagerung der Planetenradachsen (8) im Planetenträger (9), wobei jede der Planetenradachsen (8) jeweils in einem der Lagersitze (12) des ersten Lageraufnahmeabschnittes (10) und in einem der Lagersitze (12) des zweiten Lageraufnahmeabschnittes (11) gelagert sind;
mehrere Planetenräder (5), welche jeweils durch die Planetenradachsen (8) im Planetenträger (9) gelagert sind, wobei die Planetenräder (5) sowohl mit dem Sonnenrad (3) als auch mit dem Hohlrad (13) in Eingriff stehen, wobei der Planetenträger (9) im Bereich der Lagersitze (12) jeweils eine Trennebene (17) aufweist, wobei eine erste Halbschale (18) einer der Lagersitze (12) durch den Planetenträger (9) und eine zweite Halbschale (19) einer der Lagersitze (12) durch jeweils einen Lagerdeckel (20) gebildet ist, **dadurch gekennzeichnet, dass** zumindest eines der Radialgleitlager (23) als Lagerbuchse (24) ausgebildet ist, wobei die Lagerbuchse (24) fest in einem der Lagersitze (12) aufgenommen ist und eine Innenmantelfläche (26) der Lagerbuchse (24) zur Aufnahme einer Relativbewegung zwischen Lagerbuchse (24) und einer der Planetenradachsen (8) ausgebildet ist, wobei die Lagerbuchse (24) im Lagersitz (12) mittels einer Klemmung aufgenommen ist, wobei die Klemmung durch den Lagerdeckel (20) gebildet ist, welcher zusammen mit dem Planetenträger (9) den Lagersitz (12) bildet.

2. Planetengetriebe nach Anspruch 1, **dadurch gekennzeichnet, dass** einer der Lagerdeckel (20) derart ausgebildet ist, dass er sich über einen der Lagersitze (12) des ersten Lageraufnahmeabschnittes (10) und den jeweils zugehörigen Lagersitz (12) des zweiten Lageraufnahmeabschnittes (11) erstreckt.

3. Planetengetriebe nach Anspruch 1 oder 2, **dadurch gekennzeichnet, dass** einer der Lagerdeckel (20) eine Ausnehmung (22) aufweist, durch welche eines der Planetenräder (5) zumindest teilweise hindurchragt.

4. Planetengetriebe nach einem der Ansprüche 1 bis 3, **dadurch gekennzeichnet, dass** eines der Radialgleitlager (23) als geteilte Gleitlagerhalbschale (28) ausgebildet ist.

5. Planetengetriebe nach einem der vorhergehenden Ansprüche, **dadurch gekennzeichnet, dass** eine der Planetenradachsen (8) einteilig mit einem der Planetenräder (5) ausgebildet ist.

6. Planetengetriebe nach einem der vorhergehenden Ansprüche, **dadurch gekennzeichnet, dass** einer der Lagerdeckel (20) durch mehrere Verbindungselemente (21) mit dem Planetenträger (9) verbunden ist.

7. Planetengetriebe nach einem der vorhergehenden Ansprüche, **dadurch gekennzeichnet, dass** jeweils ein Axialgleitlager (29) zwischen den Stirnflächen (30) eines der Planetenräder (5) und dem Planetenträger (9) angeordnet sind.

8. Windkraftanlage mit einem Rotor und einem Generator, wobei zwischen dem Rotor und dem Generator ein Planetengetriebe (1) angeordnet ist, dass in Wirkverbindung mit dem Rotor und dem Generator steht, **dadurch gekennzeichnet, dass** das Planetengetriebe (1) nach einem der Ansprüche 1 bis 7 ausgebildet ist.

## Claims

1. A planetary gear train (1) for a wind turbine, comprising:
a sun gear (3),
an annular gear (13),
a planetary carrier (9) with a first bearing accommodating section (10) and a second bearing accommodating section (11), in which bearing accommodating sections (10, 11) a plurality of bearing seats (12) are formed respectively,
a plurality of planetary gear axles (8),
a plurality of radial sliding bearings (23) for supporting the planetary gear axle (8) in the planetary carrier (9), wherein each of the planetary gear axles (8) are mounted respectively in one of the bearing seats (12) of the first bearing accommodating section (10) and in one of the bearing seats (12) of the second bearing accommodating section (11),
a plurality of planetary gears (5), which are mounted respectively by the planetary gear axles (8) in the planetary carrier (9), wherein the planetary gears (5) are in engagement both with the sun gear (3) and also with the annular gear (13), wherein the planetary carrier (9) has a parting plane (17) in the region of the bearing seats (12), wherein a first half shell (18) of one of the bearing seats (12) is formed by the planetary carrier (9) and a second half shell (19) of one of the bearing seats (12) is formed by a bearing cap (20) respectively, **characterized in that** at least one of the radial sliding bearings (23) is formed as a bearing bush (24), wherein the bearing bush (24) is fixedly accommodated in one of the bearing seats (12) and an inner casing surface (26) of the bearing bush (24) is formed for accommodating a relative movement between the bearing bush (24) and one of the planetary gear axles (8), wherein the bearing bush (24) is accommodated in the bearing seat (12) by means of a clamping means, wherein the clamping means is formed by the bearing cap (20) which together with the planetary carrier (9) forms the bearing seat (12).

2. The planetary gear train according to claim 1, **characterized in that** one of the bearing caps (20) is designed such that it extends over one of the bearing seats (12) of the first bearing accommodating section (10) and the respectively associated bearing seat (12) of the second bearing accommodating section (11).

3. The planetary gear train according to claim 1 or 2, **characterized in that** one of the bearing caps (20) has a recess (22), through which one of the planetary gears (5) protrudes at least partly.

4. The planetary gear train according to any one of claims 1 to 3, **characterized in that** one of the radial sliding bearings (23) is designed as a split sliding bearing half shell (28).

5. The planetary gear train according to any one of the preceding claims, **characterized in that** one of the planetary gear axles (8) is designed in one piece with one of the planetary gears (5).

6. The planetary gear train according to any one of the preceding claims, **characterized in that** one of the bearing caps (20) is connected by a plurality of connecting elements (21) to the planetary carrier (9).

7. The planetary gear train according to any one of the preceding claims, **characterized in that** an axial sliding bearing (29) is arranged respectively between the end faces (30) of one of the planetary gears (5) and the planetary carrier (9).

8. A wind turbine comprising a rotor and a generator, wherein between the rotor and the generator a planetary gear train (1) is arranged which is in operative connection with the rotor and the generator, **characterized in that** the planetary gear train (1) is designed according to any one of claims 1 to 7.

## Revendications

1. Train planétaire (1) destiné à une éolienne, comprenant :
une roue solaire (3) ;
une roue creuse (13) ;
un porte-satellites (9) avec un premier tronçon de logement de palier (10) et un deuxième tronçon de logement de palier (11), dans lesquels tronçons de logement de palier (10, 11) sont constitués respectivement plusieurs sièges de palier (12) ;
plusieurs axes de pignons satellites (8) ;
plusieurs paliers lisses radiaux (23) destinés à supporter les axes de pignons satellites (8) dans le porte-satellites (9),
chacun des axes de pignons satellites (8) étant supporté respectivement dans l'un des sièges de palier (12) du premier tronçon de logement de palier (10) et l'un des sièges de palier (12) du deuxième tronçon de logement de palier (11) ;
plusieurs pignons satellites (5) qui sont respectivement supportés par les axes de pignons satellites (8) dans le porte-satellites (9), les pignons satellites (5) étant en prise aussi bien avec la roue solaire (3) qu'avec la roue creuse (13), le porte-satellites (9) présentant dans la zone des sièges de palier (12) respectivement un plan de séparation (17), une première demi-coquille (18) de l'un des sièges de palier (12) étant formée par le porte-satellites (9), et une deuxième demi-coquille (19) de l'un des sièges de palier (12) étant formée par respectivement un chapeau de palier (20), **caractérisé en ce qu'**au moins l'un des paliers lisses radiaux (23) est constitué en tant que coussinet (24), le coussinet (24) étant logé de façon fixe dans l'un des sièges de palier (12), et une surface d'enveloppe intérieure (26) du coussinet (24) étant constituée pour la réception d'un mouvement relatif entre le coussinet (24) et l'un des axes de pignons satellites (8), le coussinet (24) étant reçu dans le siège de palier (12) au moyen d'un serrage, le serrage étant formé par le chapeau de palier (20) qui forme le siège de palier (12) conjointement avec le porte-satellites (9).

2. Train planétaire selon la revendication 1, **caractérisé en ce que** l'un des chapeaux de palier (20) est constitué de telle sorte qu'il s'étend sur l'un des sièges de palier (12) du premier tronçon de logement de palier (10) et sur le siège de palier (12) respectivement correspondant du deuxième tronçon de logement de palier (11).

3. Train planétaire selon la revendication 1 ou 2, **caractérisé en ce que** l'un des chapeaux de palier (20) comporte une cavité (22) à travers laquelle dépasse au moins partiellement l'un des pignons satellites (5).

4. Train planétaire selon l'une des revendications 1 à 3, **caractérisé en ce que** l'un des paliers lisses radiaux (23) est constitué en tant que demi-coquille divisée de palier lisse (28).

5. Train planétaire selon l'une des revendications précédentes, **caractérisé en ce que** l'un des axes de pignons satellites (8) est constitué d'une seule pièce avec l'un des pignons satellites (5).

6. Train planétaire selon l'une des revendications précédentes, **caractérisé en ce que** l'un des chapeaux de palier (20) est raccordé au porte-satellites (9) par plusieurs éléments de raccordement (21).

7. Train planétaire selon l'une des revendications précédentes, **caractérisé en ce que** respectivement un palier lisse axial (29) est disposé entre les faces frontales (30) de l'un des pignons satellites (5) et le porte-satellites (9).

8. Eolienne avec un rotor et un générateur, un train planétaire (1) étant disposé entre le rotor et le générateur et étant en liaison opératoire avec le rotor et le générateur, **caractérisé en ce que** le train planétaire (1) est constitué selon l'une des revendications 1 à 7.
